(19) **Europäisches Patentamt**

**European Patent Office**

**Office européen des brevets**

(11) **EP 1 423 471 B1**

(12) **EUROPEAN PATENT SPECIFICATION**

(45) Date of publication and mention
of the grant of the patent:
**20.04.2005 Bulletin 2005/16**

(51) Int Cl.[7]: **C08K 7/22**, C08J 9/32,
C08J 9/02, C08J 9/12,
C08L 83/04

(21) Application number: **02760717.5**

(22) Date of filing: **22.08.2002**

(86) International application number:
**PCT/JP2002/008488**

(87) International publication number:
**WO 2003/020817 (13.03.2003 Gazette 2003/11)**

(54) **LOW-SPECIFIC-GRAVITY LIQUID SILICONE RUBBER COMPOSITION AND AN ARTICLE MOLDED THEREFROM**

FLÜSSIGE SILICONKAUTSCHUKMISCHUNG MIT GERINGEM SPEZIFISCHEM GEWICHT UND GEFORMTE GEGENSTÄNDE

COMPOSITION DE CAOUTCHOUC DE SILICONE LIQUIDE PRESENTANT UNE GRAVITE SPECIFIQUE BASSE ET ARTICLE MOULE

(84) Designated Contracting States:
**AT BE BG CH CY CZ DE DK EE ES FI FR GB GR IE IT LI LU MC NL PT SE SK TR**

(30) Priority: **29.08.2001 JP 2001258931**

(43) Date of publication of application:
**02.06.2004 Bulletin 2004/23**

(73) Proprietor: **Dow Corning Toray Silicone Company, Ltd.**
**Chiyoda-ku, Tokyo 100-0005 (JP)**

(72) Inventors:
• **OKA, Yutaka,**
**Dow Corning Toray Silicone Co., Ltd.**
**Ichihara-shi, Chiba 299-0108 (JP)**

• **TSUJI, Yuichi,**
**Dow Corning Toray Silicone Co. Ltd.**
**Ichihara-shi, Chiba 299-0108 (JP)**

(74) Representative: **Kyle, Diana**
**Elkington and Fife LLP,**
**Prospect House**
**8 Pembroke Road**
**Sevenoaks, Kent TN13 1XR (GB)**

(56) References cited:
EP-A- 1 094 091      EP-A- 1 130 049
EP-A- 1 136 522      EP-A- 1 149 871
US-A- 5 981 610      US-A1- 2001 016 609

• **PATENT ABSTRACTS OF JAPAN vol. 011, no. 089 (C-411), 19 March 1987 (1987-03-19) & JP 61 243836 A (YAMAUCHI RUBBER IND CO LTD), 30 October 1986 (1986-10-30)**

EP 1 423 471 B1

**Description**

The present invention relates to a low-specific-gravity liquid silicone rubber composition and in particular to a low-specific-gravity liquid silicone rubber composition suitable for moulding articles into a low-specific-gravity silicone rubber which possesses dimensional stability upon heating or cooling, as well as to articles moulded from the aforementioned silicone rubber composition.

A low-specific-gravity silicone rubber is resistant to heat, has excellent weather-proof properties, and is light in weight and therefore may be used in a large number of applications, for example manufacturing seals, packings, gaskets, and coatings for rollers of the type used in copiers, printers, facsimile machines, and the like.

Japanese Patent Application Publication (Kokai) Number Hei5-209080 (equivalent to EP0553843) describes a low-specific-gravity liquid silicone rubber composition that contains hollow thermoplastic particles thermally expandable by applying heat to the aforementioned silicone rubber composition. However, silicone rubber articles formed by curing the aforementioned composition experience a significant volumetric deformation caused by thermal expansion of hollow particles contained in the composition. Therefore this composition is unsuitable for use in the above applications in particular the manufacturing automobile gaskets, coatings for rollers of copiers, printers, facsimile machines, or other components which require high dimensional accuracy during moulding with heating in metal moulds or during practical use with frequent heating or cooling of the moulded components.

Volumetric changes caused by heating may be reduced if a silicone composition is combined with inorganic hollow particles made of, for example, glass which is not subject to thermal expansion, although unfortunately such particles quickly deteriorate. Furthermore, articles moulded from a silicone rubber having a significant decrease in specific gravity typically have either extremely high hardness and/or their hardness is significantly changed after extended use in a high-temperature environment.

US 2001/0016609 A1 describes a silicone rubber composition comprising a heat curable organopolysiloxane, organic resin-based microspheres and a polyhydric alcohol to provide a low specific gravity silicone rubber which is said to experience a low compression set at elevated temperatures. The polyhydric alcohol is used as a compression set improver.

US 5332762 uses water as a blowing agent in the form of aqueous emulsions containing organopolysiloxanes, emulsifiers, water and thickeners, for the preparation of elastomeric silicone foams. Other silicone foams blown using water are described in US 4599367 and US 4613630.

It is an object of the present invention to provide a low-specific-gravity liquid silicone rubber composition, particularly an addition cured low specific gravity liquid silicone rubber (i.e. cured by a hydrosilylation reaction process), combined with hollow particles, which is characterized by perfect dimensional stability during moulding, reduced variations in dimensions of moulded articles used under conditions of cooling and heating, and having microfine and uniform cells.

In accordance with the present invention there is provided a low-specific-gravity liquid silicone rubber composition, comprising;

100 parts by weight of a liquid diorganopolysiloxane having a viscosity of from 100 to 100,000 mPa·s;

1 to 50 parts by weight of a fine-powdered hydrophobic reinforcement silica filler;

A curing agent in an amount sufficient to cure the composition;

0.1 to 20 parts by weight of hollow resin particles consisting of external shells made of a non-silicone thermoplastic resin, and gaseous or volatile-liquid cores; and

water in a volume ratio of water: component (E) ranging from 0.01:1 to 5:1.

Component (A) is a liquid diorganopolysiloxane, represented by the following average unit formula:

$$R_aSiO_{(4-a)/2}$$

wherein R is a monovalent hydrocarbon group or a halogenated alkyl group, for example an alkyl group such as methyl, ethyl, propyl, isopropyl and pentyl; an alkenyl group such as vinyl, allyl, or hexenyl; a cycloalkyl group such as cyclohexyl; an aralkyl group such as β-phenylethyl; and an aryl group such as phenyl. The aforementioned halogenated alkyl group may be, for example, 3-chloropropyl or 3,3,3-trifluoropropyl; "a" is a number with a value between 1.8 and 2.3. Preferably component (A) has a viscosity at 25°C of from 100 to 100,000 mPa·s, and has a molecular structure which is substantially linear although may be partially branched.

Examples of component (A) may include
a dimethylvinylsiloxy-terminated dimethylpolysiloxane,
a dimethylvinylsiloxy-terminated copolymer of methylvinylsiloxane and dimethylsiloxane,
a silanol-terminated copolymer of methylvinylsiloxane and dimethylsiloxane,
a dimethylvinylsiloxy-terminated copolymer of methylphenylsiloxane and dimethylsiloxane,

a dimethylvinylsiloxy-terminated copolymer of methylphenylsiloxane, methylvinylsiloxane, and dimethylsiloxane,
a dimethylvinylsiloxy-terminated copolymer of diphenylsiloxane and dimethylsiloxane,
a dimethylvinylsiloxy-terminated copolymer of diphenylsiloxane, methylvinylsiloxane, and dimethylsiloxane,
a dimethylvinylsiloxy-terminated copolymer of methyl (3,3,3-trifluoropropyl)siloxane and dimethylsiloxane, and
a dimethylvinylsiloxy-terminated copolymer of methyl (3,3,3-trifluoropropyl)siloxane, methylvinylsiloxane, and dimethylsiloxane.

Component (B) is intended to increase the physical strength of an article formed from a low-specific-gravity silicone rubber obtained by curing the composition in accordance with the present invention. In order to improve flowability of the composition and improve its miscibility with component (A), the filler is hydrophobically treated. Component (B) may be represented by any suitable form of silica for example a dry-process silica such as a fumed silica, or a wet-process silica such as precipitated silica or a mixture thereof. Any suitable organosilicon compound may be used to affect the hydrophobic coating on the silica filler of component (B); examples include one or more of an organochlorosilane, organoalkoxysilane, hexaorganodisilazane and/or a cyclodiorganopolysiloxane.

For preparation of the composition in accordance with the invention, component (A) is preferably mixed and kneaded with untreated reinforcement fine-powder silica filler and the surface-treatment agent, so that during mixing the surface of the aforementioned silica is rendered hydrophobic. Preferably component (B) has a BET specific surface area exceeding 50 m$^2$/g, more preferably exceeding 100 m$^2$/g. This component should be used in an amount of from 1 to 50 parts by weight, preferably 1 to 25 parts by weight, and even more preferably from 5 to 25 parts by weight per 100 parts by weight of component (A). This is because, if component (B) is used in an amount smaller than the lower recommended limit, the articles formed from the above composition will have insufficient mechanical strength. If, on the other hand, component (B) is used in an amount exceeding the upper recommended limit, it would be difficult to mix it with component (A), and the composition as a whole will be come too viscous and difficult to handle in production.

Component (C) causes the cure of the composition in accordance with the present invention. Any suitable curing agent may be utilised. Organoperoxides are an example of typical curing agents which may be used in accordance with the present invention. Organoperoxides which may be used include benzoyl peroxide, di-tert-butyl peroxide, 2,5-dimethyl-2,5-di(tert-butylperoxy)hexane, monomethylbenzoylperoxides (e.g., bis(orthomethylbenzoyl)peroxide, bis(meta-methylbenzoyl)peroxide, bis(paramethylbenzoyl)peroxide), dimethylbenzoylperoxides such as bis (2,4-dimethylbenzoyl)peroxide, and bis(2,4,6-trimethylbenzoyl)peroxide. Organoperoxide curing agents should be added in a range of from 0.1 to 10 parts by weight per 100 parts by weight of the mixture of components (A), (B), and (D) or (A), (B), (D), and (F).

In the case when each molecule of Component (A) contains at least two alkenyl groups, such as vinyl groups, the curing of the composition in accordance with the present invention may be carried out using an addition curing reaction, in which case component (C) preferably comprises (C-1) a platinum-based catalyst suitable for use in combination with (C-2) a cross-linking agent in the form of a polyorganosiloxane having at least two silicon-bonded hydrogen atoms per molecule, which combination is the preferred curing agent for the composition in accordance with the present invention because it enables the curing characteristics to be freely varied. Component (C-2) must have at least two silicon-bonded hydrogen atoms per molecule and has the following average unit formula:

$$R^i_b SiO_{(4-b)/2}$$

where each $R^i$ may be the same or different and is hydrogen, an alkyl group such as methyl, ethyl, propyl, and isopropyl or an aryl group such as phenyl and tolyl. Component (C-2) may have a linear, partially-branched linear, cyclic, or a net-like structure.

Examples of the aforementioned organopolysiloxane include one or more of the following:-

a trimethylsiloxy-terminated polymethylhydrogensiloxane,
a trimethylsiloxy-terminated copolymer of methylhydrogensiloxane and dimethylsiloxane,
a dimethylhydrogensiloxy-terminated copolymer of methylhydrogensiloxane and dimethylsiloxane,
a cyclic copolymer of methylhydrogensiloxane and dimethylsiloxane,
an organopolysiloxane composed of siloxane units expressed by the formula $(CH_3)_3SiO_{1/2}$, siloxane units expressed by the formula $(CH_3)_2HSiO_{1/2}$, and siloxane units expressed by the formula $SiO_{4/2}$,
an organopolysiloxane composed of siloxane units expressed by the formula $(CH_3)_2HSiO_{1/2}$, siloxane units expressed by the formula $CH_3SiO_{3/2}$,
an organopolysiloxane composed of siloxane units expressed by the formula $(CH_3)_2HSiO_{1/2}$, siloxane units expressed by the formula $(CH_3)_2SiO_{2/2}$, and siloxane units expressed by the formula $CH_3SiO_{3/2}$,
a dimethylhydrogensiloxy-terminated polydimethylsiloxane,
a dimethylhydrogensiloxy-terminated copolymer of methylphenylsiloxane and dimethylsiloxane, and

a dimethylhydrogensiloxy-terminated copolymer of a methyl (3,3,3-trifluoropropyl) siloxane and dimethylsiloxane.

Preferably the viscosity of the cross-linking agent (C-2) at 25°C is in a range of from 2 to 100,000 mPa·s. It is recommended that the cross-linking agent (C-2) be added in an amount such that the mole ratio of silicon-bonded hydrogen atoms in the cross-linking agent (C-2) to the mole number of alkenyl groups in component (A) is in the range of from 0.3:1 to 5:1. If the above ratio is lower than 0.3:1, the density of cross-linking will be too low and it will be difficult to obtain a rubber-like elastomer. A ratio exceeding 5:1 may result in either a dehydrogenation reaction leading to the formation of bubbles or a decrease of heat-resistant properties in the cured silicone rubber.

Examples of the platinum-based catalyst (C-1) which may be used in conjunction with the cross-linking agent (C-2) above include a fine platinum powder, platinum black, chloroplatinic acid, an alcoholic solution of chloroplatinic acid, an olefin complex of chloroplatinic acid, a complex of chloroplatinic acid and alkenylsiloxane, or a thermoplastic resin that contain the aforementioned platinum catalyst. The platinum catalyst is used in an amount such that the content of metallic platinum atoms constitutes from 0.1 to 500 parts by weight per 1,000,000 parts by weight of component (A).

Component (D) is an essential component for reducing the weight of the silicone rubber composition. Any non-silicone thermoplastic resin suitable for forming the hollow-particle shell may be selected from polymers and copolymers of one or more of the following:

vinyl-type polymer or copolymers such as polyethylene, polystyrene, polyvinyl acetate, polyvinyl chloride, polyvinylidene chloride, polyacrylonitrile, polymethacrylonitrile, methyl polymethacrylate, polybutadiene and polychloroprene; polyamide based polymers or copolymers such as Nylon 6 or Nylon 66; polyester polymers or copolymers such as poly (ethylene terephthalate) or poly (butylene terephthalate); or polycarbonate or polyacetal polymers and/or copolymers, or mixtures of the above. In order to improve surface strength and dispersity of this component, it may be treated with calcium carbonate, talc, titanium oxide, or the like. Preferably the softening initiation temperature of the aforementioned hollow particles, i.e. the softening point of the shell material, at which temperature the hollow particles start to expand, is within a range of from 70°C to 200°C, and preferably from 70°C to 160°C.

The gaseous or volatile liquid core may comprise air, nitrogen, or inert gases which are gaseous at room temperature. Alternatively, the hollow resin particles may be filled with carbonaceous gases; such as propane, butane, isobutane, isobutene, pentane, isopentane; alcohols such as methanol and ethanol; halogenated hydrocarbons such as dichloroethane, trichloroethane, trichloroethylene or similar; and other volatile liquids such as ethers for example diethyl ether, isopropyl ether.

Preferably at room temperature the hollow resin particles have a diameter of from 5 μm to 300 μm, more preferably from 5 μm to 100 μm. If the diameter of the hollow particles is smaller than the lower recommended limit, the specific gravity of the silicone rubber would not be noticeably reduced. If, on the other hand, the diameter of hollow particles exceeds the upper recommended limit, the hollow particles will loose their physical strength and therefore may break either during preparation of the composition in accordance with the present invention or during the formation of articles from the silicone rubber. The aforementioned powders, which are suitable for use as shells of the particles may be roughly divided into powders which are not yet expanded having a true specific gravity within the range of from 0.1 to 1.3 and powders which have been preliminarily expanded, having a true specific gravity within the range of from 0.01 to 0.10. Such powders are supplied by Nihon Ferrite Co., Inc. under trademark "Expancel" and by Matsumoto Yushi Seiyaku K.K under trademark "Matsumoto Microsphcre". It is to be understood that the true specific gravity of a body is the weight per unit of volume of solid material of a substance excluding all pores when measured at standard temperature and pressure.

Component (D) is used in an amount of from 0. to 20 parts by weight and preferably 1 to 15 parts by weight per 100 parts by weight of component (A). When the true specific gravity of the hollow particles is between 0.10 and 1.30, they should be used in an amount of from 0.5 to 20 parts by weight and preferably 0.5 to 15 parts by weight per 100 parts by weight of component (A). If the true specific gravity of the hollow particles is between 0.01 and 0.10, they should be used in an amount of from 0.1 to 15 parts by weight and preferably from 0.5 to 10 parts by weight per 100 parts by weight of component (A).

Component (E) is used to improve the dimensional accuracy during thermal forming, as well, as for decreasing dimensional deformations in the formed product under effect of cooling and heating in use. Aforementioned component (E) may be any suitable form of water of high purity such as, for example, distilled water, ultra filtrated and ion-exchanged water, ion-exchange water and the like.

It is recommended that the volumetric ratio of component (E) to component (D) be within the range of from 0.01:1 to 5:1. When the true specific gravity of component (D) is between 0.10 and 1.30, the volumetric ratio of component (E) to component (D) should be within the range of from 0.1:1 to 5:1. If the true specific gravity of component (E) is between 0.010 and 0.10, the volumetric ratio of component (E) to component (D) should be within the range of from 0.01:1 to 1:1.

Component (E) may be introduced to the composition in accordance with present invention either alone or preferably in a premix with component (D). Uniform dispersion of component (E) in such a mixture will prevent component (D) from scattering and will facilitate handling during preparation of the composition.

Optionally the composition in accordance with the invention may also comprise component (F) in the form of from 1 to 30 parts by weight of hollow particles having shells made from an inorganic material and filled with a gaseous substance. When component (F) is used in combination with component (D), protection against increase in surface roughness, generation of cracks during moulding, stabilization of dimensions, and further decrease of specific gravity is enhanced. Outer shell of component (F) preferably comprises hollow particles made from inorganic material filled with a gaseous substance. The hollow inorganic particles may be represented by for example glass balloons and ceramic balloons and the like. It should be noted that inorganic particles of component (F) are not limited by the examples given above. The hollow inorganic particles may be filled with air, nitrogen, helium, or another inert gas. The size of the component (F) should not exceed 150 µm. This is because, if the size of the hollow inorganic particles exceeds 150 µm, they loose mechanical strength, so that they may be deteriorated at the stage of preparation of the compound or at the stage of forming a silicone rubber article. When used component (F) is preferably used in an amount of from 1 to 20 parts by weight per 100 parts by weight of component (A). If the content of component (F) exceeds the upper limit, the article produced by curing the composition will become either too hard and/or too brittle.

As an additional optional component, the composition in accordance with the present invention may also contain hollow particles made from silicone resin having an average diameter of from 0.1 to 500 µm. The hollow particles made from silicone resin comprise shells of silicone resin with a melting point between 40 and 200°C. The silicone resin shells are filled with air or an inert gas, such as helium or the like. Such hollow resin particles may be produced, e.g., by pulverizing a dispersion, composed of water and a silicone resin dissolved in a solvent, into a flow of hot air through a spray nozzle along with flash drying of the organic solvent. Preferably when used these hollow silicone resin particles may be introduced into the composition in an amount of from 0.01 to 20 parts by weight per 100 parts by weight of component (A).

Other optional components include inorganic fillers such baked silica, manganese carbonate, aluminium hydroxide, quartz powder, diatomaceous earth, aluminium silicate and/or calcium carbonate; pigments such as titanium dioxide; heat-resistant agents such as cerium oxide or cerium hydroxide; conductive/metal powders such as carbon black, silver powder conductive zinc oxide or conductive aluminium oxide. The aforementioned inorganic fillers may be used in their untreated form, or may be rendered hydrophobic by treating with an agent such as an organoalkoxysilane, organochlorosilane, hexaorganosilazane, polyorganosiloxane, or the like. The aforementioned inorganic filler may be treated during the preparation of the composition of the invention by kneading the surface-treatment agent with the untreated inorganic filler and with aforementioned component (A).

In order to improve handling conditions and storage properties, the composition may be combined with one or more curing inhibitors, for example acetylene-type compounds, such as 2-methyl-3-butyn-2-ol, 2-phenyl-3-butyn-2-ol, 3,5-dimethyl-1-hexyn-3-ol, 1-ethynyl-1-cyclohexanol, 1,5-hexadiene, 1,6-heptadiene; 3,5-dimethyl-1-hexen-1-yne; 3-ethyl-3-buten-1-yne and/or 3-phenyl-3-buten-1-yne; an alkenylsiloxane oligomer such as 1,3-divinyltetramethyldisiloxane, 1,3,5,7-tetravinyltetramethyl cyclotetrasiloxane, or 1,3-divinyl-1,3-diphenyldimethyldisiloxane; a silicon compound containing an ethynyl group such as methyltris (3-methyl-1-butyn-3-oxy) silane; a nitrogen-containing compound such as tributylamine, tetramethylethylenediamine, benzotriazole; a similar phosphorus-containing compound such as triphenylphosphine; as well as sulphur-containing compounds, hydroperoxy compounds, or maleic-acid derivatives.

The aforementioned curing inhibitors are used in an amount of from 0 to 3 parts by weight, normally from 0.001 to 3 parts by weight, and preferably from 0.01 to 1 part by weight per 100 parts by weight of component (A). Most preferable among the curing inhibitors are the aforementioned acetylene-type compounds, which demonstrate the best balance between storage characteristics and speed of curing when they are used in a combination with aforementioned component (D).

The composition of the invention may also include one or more polydiorganosiloxanes which are free from silicon-bonded alkenyl groups and silicon-bonded hydrogen atoms such as a trimethylsiloxy-terminated dimethylpolysiloxane, a dimethylhydroxysiloxy-terminated dimethylpolysiloxane, a trimethylsiloxy-terminated copolymer of methylphenylsiloxane and dimethylsiloxane; a trimethylsiloxy-terminated copolymer of diphenylsiloxane and dimethylsiloxane; a dimethylhydroxysiloxy-terminated copolymer of methylphenylsiloxane and dimethylsiloxane, a trimethylsiloxy-terminated copolymer of methyl (3,3,3-trifluoropropyl) siloxane and dimethylsiloxane, or any other suitable organopolysiloxanes which are free from silicon-bonded alkenyl groups and silicon-bonded hydrogen atoms. The following additives may also be used when required, powdered silicone additives such as silicone rubber powder and silicone resin powder; carboxylic acids or carboxylic acid metal salts such as stearic acid, calcium stearate, zinc stearate, or similar carboxylic acids or carboxylic acid metal salts; heat-resistance improvers such as cerium silanolate; as well as a polyoxyalkylene-modified polyorganosiloxane and surface-active agents for use as dispersants in water.

In the case where an addition curing process is used the composition of the invention is prepared by uniformly mixing components (A) to (E) and optionally component (F) and by introducing any other optional additional components. Mixing may be carried out with using any suitable mixer such as a kneader-mixer, pressure kneader-mixer, Ross mixer, continuous-flow type kneader-extruder, or similar mixing equipment. In order to improve the storage stability of the composition at room temperature and in order to maintain excellent curability when, after storage, the composition is used for a co-moulding. It is recommended to prepare the composition in accordance with the invention by having a multipack composition, of two or more parts and mixing same to obtain the composition of the present invention. Preferably such a multipack is a two-part composition in which:

The first part comprises at least a proportion of component (A) and the platinum-based catalyst (C-1) but no cross-linking agent (C-2) and the second part comprises the remainder of component (A) and the cross-linking agent (C-2) but no platinum-based catalyst (C-2). Components (B), (D) and (E) maybe included in either or both first and second parts of the liquid silicone rubber composition.

When the composition is evenly mixed and cured, it will be seen to be a low-specific-gravity silicone rubber. Normally, the curing temperature will be 80°C or more and preferably within the range of from 100 to 180°C. The addition cure of the silicone rubber composition may occur at temperatures below the lower limit of the recommended range. However, in this case either the forming process will take a very long time or the moulded parts will not possess the adhesiveness required for adhesive connection with other parts in manufacturing composite products.

Products may be moulded from the composition of the present invention by utilizing moulding machines and processes used for conventional liquid silicone rubber compositions. In particular, the products may be moulded by using injection moulding, pressure moulding, transfer moulding, dispensers, etc.

The composition of the invention provides perfect thermal stability during moulding and minimal change in dimensions after curing due to thermal expansion. Since the composition forms a low-specific-gravity silicone rubber with excellent stability of dimensions in the case of heating and cooling, this composition is suitable for manufacturing articles that require the use of materials with specific properties, e.g., for coating on rollers of copying machines, printers, facsimile machines, in particular fixing rollers, as well as for gaskets used in automobiles and aircraft devices.

Examples

The invention will now be described with reference to the following examples, in which all parts referred to are parts by weight, and all values of viscosity are obtained by measurements with a rotary viscometer at 25°C.

Method for Manufacturing Specimens

Each sample under test was subjected to pressure curing for 15 min. at 120°C. The resulting cured products were subsequently heat-treated for 4 hours in an oven at 200°C to form 6 mm-thick sheet-like test specimens for measurement of hardness and specific gravity and 12 mm-thick, 29 mm-diameter disk-like specimens for measurement of a thickness variation coefficient. The obtained samples were available for test after a 1-day retention at room temperature.

Method for Measuring Hardness

Hardness was measured with the use of the Asker C durometer on 6 mm-thick sheet-like specimens manufacture as described above.

Method for Measuring Thickness Variation Coefficient

The initial thickness of each sample (to) was measured on the 12 mm-thick disk-like specimens manufactured by the method described above. The thickness (t) was measured for the second time on a non-contact thickness measurement instrument after retaining the specimens in a 200°C oven for 4 hours, removing them from the oven, and cooling for 30 min. at room temperature. The thickness variation coefficient was calculated based on the results of measurements with the use of the following formula:

$$\text{Thickness Variation Coefficient (\%)} = (t-t_0)/t_0 \times 100.$$

Example 1

A uniform mixture was prepared with the use of a Ross mixer from the following components:

30 parts of a 40,000 mPa·s viscosity dimethylvinylsiloxy-terminated dimethylpolysiloxane having a vinyl group content of 0.08 wt.%;
70 parts of a 340 mPa·s viscosity dimethylvinylsiloxy-terminated copolymer of dimethylsiloxane and methylvinylsiloxane having a vinyl group content of 0.90 wt.%;
3 parts of hollow resin particles in which the shell portions are made from a copolymer of vinylidene chloride and acrylonitrile ("EXPANCEL 461 DE"; product of Nihon Ferrite Co., Ltd (softening initiation temperature 100°C; average particle diameter 40 µm; true specific gravity 0.06); which shell encapsulates isobutane gas;
10 parts of fumed silica surface-treated with hexamethyldisilazane having a BET method specific surface area of 130 $m^2$/g; and
17 parts of water.

The above components were mixed together to produce a flowable liquid silicone rubber base compound. The resulting liquid silicone rubber base compound was further combined and uniformly mixed with the following components:

4.9 parts of a dimethylhydrogensiloxy-tenninated copolymer of dimethylsiloxane and methylhydrogensiloxane (containing 40 mole % of methylhydrogensiloxane units and 60 mole % of dimethylsiloxane units, the copolymer contained 0.40 wt.% of silicon-bonded hydrogen atoms and had a ratio of the mole number of Si-H bonds to the mole number of vinyl groups in the vinyl-containing diorganopolysiloxane contained in the aforementioned liquid silicone rubber base compound equal to 0.80: 1.0);
a platinum catalyst in the form of a complex of a chloroplatinic acid and 1,3-divinyltetramethyldisiloxane used in an amount such that in the aforementioned liquid silicone rubber compound 20 parts of atoms of platinum corresponded to $10^6$ parts of the vinyl-group-containing diorganopolysiloxane; and
a curing inhibitor in the form of 0.08 parts of 1-ethynyl-1-cyclohexanol.

As a result, a liquid silicone rubber composition was obtained. This composition had a viscosity of 64,000 mPa·s. The obtained composition was used for measuring specific gravity, as well as hardness and the thickness variation coefficient of specimens by the same methods as described above, the results of which are shown in Table 1.

Example 2

A liquid silicone rubber composition was obtained by the same method as described in Example 1, with the exception that 10 parts by weight of glass balloons ("Glass Babbles" S38; the product of Sumitomo 3M Co., Ltd.; particle diameter 75 µm; true specific gravity 0.38) were added to the liquid silicone rubber base compound. This composition had a viscosity of 69,000 mPa·s. The obtained composition was used for measuring specific gravity, as well as hardness and the thickness variation coefficient of specimens by the same methods as in Example 1, the results of which are shown in Table 1.

Example 3

A liquid silicone rubber composition was obtained by the same method as described in Example 2, with the exception that 15 parts of a mixture of 85 wt.% of water and 15 wt.% of hollow resin particles ("EXPANCEL 461 DE"; Nihon Ferrite Co. Ltd., softening initiating temperature 100°C; average particle diameter 40 µm; true specific gravity 0.06) were used instead of the combination of water and the hollow resin particles used in Example 2. This composition had a viscosity of 82,000 mPa·s. The obtained composition was used for measuring specific gravity, as well as hardness and the thickness variation coefficient of specimens by the same methods as in Example 1, the results of which are shown in Table 1.

Example 4

A liquid silicone rubber composition was obtained by the same method as described in Example 2, with the exception that 10 parts of Matsumoto Microsphere F30E which encapsulates isobutane gas and having shells made from a copolymer of vinylidene chloride and acrylonitrile (the product of Matsumoto Yushi Seiyaku Co., Ltd.; softening initiating temperature 80°C; average particle diameter 40 µm; true specific gravity 0.03; a mixture of 85 wt. % of water and 15 wt. % of the hollow resin particles) were used instead of the combination of water and the thermoplastic hollow resin particles ("EXPANCEL 461 DE") used in Example 2. This composition had a viscosity of 54,000 mPa·s. The obtained composition was used for measuring specific gravity, as well as hardness and the thickness variation coefficient of specimens by the same methods as in Example 1, the results of which are shown in Table 1.

Comparative Example 1

A liquid silicone rubber composition was obtained by the same method as described in Example 1, with the exception that the dimethylhydrogensiloxy-terminated copolymer of dimethylsiloxane and methylhydrogensiloxane, composed of 40 mole % methylhydrogensiloxane units and 60 mole % dimethylsiloxane units (the content of silicon-bonded hydrogen atoms was equal to 0.40 wt. %) was added without water in an amount of 3.3 parts (a ratio of the mole number of silicon-bonded hydrogen atoms to the mole number of the vinyl groups in the vinyl-containing diorganopolysiloxane contained in the aforementioned liquid silicone rubber base compound was equal to 0.55 : 1). This composition had a viscosity of 34,000 mPa·s. The obtained composition was used for measuring specific gravity, as well as hardness and the thickness variation coefficient of specimens by the same methods as in Example 1, the results of which are shown in Table 1.

Comparative Example 2

A liquid silicone rubber composition was obtained by the same method as described in Example 2, with the exception that the dimethylhydrogensiloxy-terminated copolymer of dimethylsiloxane and methylhydrogensiloxane was added without water in an amount of 3.3 parts (a ratio of the mole number of silicon-bonded hydrogen atoms to the mole number of the vinyl groups in the vinyl-containing diorganopolysiloxane contained in the aforementioned liquid silicone rubber base compound was equal to 0.55 : 1). This composition had a viscosity of 34,000 mPa·s. The obtained composition was used for measuring specific gravity, as well as hardness and the thickness variation coefficient of specimens by the same methods as in Example 1, the results of which are shown in Table 1.

Table 1

|  | Ex. 1 | Ex. 2 | Ex. 3 | Ex. 4 | Comp. Ex. 1 | Comp. Ex. 2 |
|---|---|---|---|---|---|---|
| Specific Gravity | 0.61 | 0.49 | 0.60 | 0.49 | 0.69 | 0.66 |
| Hardness (Asker C) | 23 | 30 | 43 | 26 | 24 | 32 |
| Thickness Variation Coefficient (%) | 0.00 | 0.00 | 0.00 | 0.00 | 4.11 | 2.29 |

Example 5

A liquid silicone rubber base compound was prepared by combining
100 parts of a 24,000 mPa·s viscosity trimethylsiloxy-terminated copolymer of dimethylsiloxane and methylvinylsiloxane (the vinyl group content was 0.40 wt.%) and
1.5 parts of isobutane-filled hollow resin particles having shells made from a copolymer of methacrylonitrile, acrylonitrile, and methyl methacrylate (EXPANCEL 091-140DU; product of Nihon Ferrite Co., Ltd.;
softening initiating temperature 120°C; average particle diameter 40 μm; true specific gravity 1.00). The components were kneaded at 170°C, the hollow resin particles were expanded in the aforementioned diorganopolysiloxane that contained vinyl groups, and the mixture was cooled to below 40°C.
A liquid silicone rubber base compound was then prepared by combining the product with the following components:

10 parts of fumed silica surface-treated with hexamethyldisilazane having a BET method surface area of 130 $m^2/g$;
1 part of hollow silicone resin particles having an average diameter of 40 μm, filled with gaseous nitrogen, and having shells made from a thermoplastic silicone resin with the 80°C softening temperature (the ratio of the mole number ofmethylsiloxane units to the mole number of methylphenylsiloxane units was 22: 78); and
0.5 parts of water.

A liquid silicone rubber composition was then prepared by further combining the obtained liquid silicone rubber base compound with the following components:

6.4 parts of a dimethylhydrogensiloxy-terminated dimethylpolysiloxane (0.20 wt.% of silicon-bonded hydrogen atoms such that the ratio of the number of silicon-bonded hydrogen atoms to the number of the vinyl groups in the vinyl-containing diorganopolysiloxane contained in the aforementioned liquid silicone rubber base compound was equal to 0.85: 1);

a platinum catalyst in the form of a complex of chloroplatinic acid and 1,3-divinyltetramethyldisiloxane used in such an amount that provides 20 parts of platinum atoms per $10^6$ parts of the vinyl-group-containing organopolysiloxane in the aforementioned liquid silicone rubber compound; and

a curing inhibitor in the form of 0.08 parts of 1-ethynyl-1-cyclohexanol.

The resulting composition had a viscosity of 380,000 mPa·s. The obtained composition was used for measuring specific gravity, as well as hardness and the thickness variation coefficient of specimens by the same methods as described earlier. The results of measurements are shown in Table 2.

Comparative Example 3

A liquid silicone rubber composition was prepared by the same method as in Example 5, with the exception that hollow silicone resin particles and water were not used. The obtained composition had a viscosity of 250,000 mPa·s. The obtained composition was used for measuring specific gravity, as well as hardness and the thickness variation coefficient of specimens by the same methods as described earlier. The results of measurements are shown in Table 2.

Comparative Example 4

A liquid silicone rubber composition was prepared by the same method as in Example 5, with the exception that 8 parts by weight of 1,4-butanediol was used and hollow silicone resin particles and water were not used. The obtained composition had a viscosity of 300,000 mPa·s. The obtained composition was used for measuring specific gravity, as well as hardness and the thickness variation coefficient of specimens by the same methods as described earlier. The results of measurements are shown in Table 2.

Table 2

|  | Example 5 | Comparative Example 3 | Comparative Example 4 |
|---|---|---|---|
| Specific Gravity | 0.57 | 0.62 | 0.60 |
| Hardness (Asker C) | 38 | 34 | 34 |
| Thickness Variation Coefficient (%) | 0.24 | 0.92 | 1.29 |

Effects of the Invention

As the low-specific-gravity silicone rubber composition of the invention comprises aforementioned components (A), (B), (C), (D) and (E) and optionally (F), it demonstrates excellent dimensional stability during moulding as well as during heating and cooling after curing. The low-specific-gravity silicone rubber composition of the invention is suitable for manufacturing various gaskets and rollers for copiers, printers, facsimile machines, etc., which are lighter in weight and have higher dimensional stability during heating and cooling than similar parts made from known compositions.

**Claims**

1. A low-specific-gravity liquid silicone rubber composition, comprising;

(A) 100 parts by weight of a liquid diorganopolysiloxane having a viscosity of from 100 to 100,000 mPa·s;
(B) 1 to 50 parts by weight of a fine-powdered hydrophobic reinforcement silica filler,
(C) a curing agent in an amount sufficient to cure the composition;
(D) 0.1 to 20 parts by weight of hollow resin particles consisting of external shells made of a non-silicone thermoplastic resin, and gaseous or volatile-liquid cores; and
(E) water in a volume ratio of water: component (D) ranging from 0.01:1 to 5:1.

2. A low-specific-gravity liquid silicone rubber composition in accordance with any preceding claim which additionally comprises (F) 1 to 20 parts by weight of hollow powder particles having shells made from an inorganic material.

3. A low-specific-gravity liquid silicone rubber composition in accordance with any preceding claim, wherein a mixture of components D and E is added in an amount of from 1 to 70 parts by weight per 100 parts by weight of component (A).

4. A low-specific-gravity liquid silicone rubber composition in accordance with any preceding claim wherein the water is selected from the group of distilled water, ultra filtrated and ion-exchanged water and, ion-exchange water.

5. A low-specific-gravity liquid silicone rubber composition in accordance with any preceding claim which further comprises silicone resin hollow particles having an average diameter of from 0.1 to 500 $\mu$m.

6. A low-specific-gravity liquid silicone rubber composition in accordance with any preceding claim, wherein component (A) is a polyorganosiloxane containing at least two silicon-bonded alkenyl groups and component (C) comprises:-

   (C-1) a platinum-based catalyst, wherein the amount of platinum metal in said platinum-based catalyst is from 0.01 to 500 parts by weight per 1,000,000 parts by weight of component (A); and
   (C-2) a cross-linking agent in the form of a polyorganosiloxane containing at least two silicon-bonded hydrogen atoms per molecule, in an amount such that the ratio of the number of moles of silicon-bonded hydrogen to the number of moles of silicon-bonded alkenyl groups in component (A) is from 0.5: 1 to 20: 1.

7. A two-part kit adapted to be used in the preparation of the liquid silicone rubber composition in accordance with claim 6 comprising a first part containing a portion of component (A) and the platinum-based catalyst but no cross-linking agent and a second part containing the remaining portion of component (A) and the cross-linking agent but no platinum-based catalyst, and having each of components (B), (D) and (E) in either or both said first part and or said second part

8. Use of a low-specific-gravity liquid silicone rubber composition in accordance with any preceding claims as a coating for a fixing roller.

9. An article moulded from a low-specific-gravity silicone rubber obtained by thermally curing the low-specific-gravity liquid silicone rubber composition according to any of the aforementioned Claims from 1 to 7.

**Patentansprüche**

1. Flüssige Siliconkautschukzusammensetzung mit niedrigem spezifischen Gewicht, enthaltend:

   (A) 100 Gewichtsteile eines flüssigen Diorganopolysiloxans mit einer Viskosität von 100 bis 100.000 mPa·s,
   (B) 1 bis 50 Gewichtsteile eines fein pulverisierten hydrophoben verstärkenden Siliciumdioxidfüllstoffs,
   (C) ein Härtungsmittel in einer Menge, die ausreichend ist, um die Zusammensetzung zu härten,
   (D) 0,1 bis 20 Gewichtsteile hohle Harzteilchen, die aus äußeren Hüllen, die aus einem thermoplastischen Nichtsiliconharz hergestellt sind, und Kernen aus Gas oder einer flüchtigen Flüssigkeit bestehen, und
   (E) Wasser in einem Volumenverhältnis von Wasser:Komponente (D) im Bereich von 0,01:1 bis 5:1.

2. Flüssige Siliconkautschukzusammensetzung mit niedrigem spezifischen Gewicht gemäß Anspruch 1, die zusätzlich (F) 1 bis 20 Gewichtsteile hohle Pulverteilchen mit Hüllen, die aus einem anorganischen Stoff hergestellt sind, enthält.

3. Flüssige Siliconkautschukzusammensetzung mit niedrigem spezifischen Gewicht gemäß einem der vorstehendem Ansprüche, wobei eine Mischung aus Komponenten (D) und (E) in einer Menge von 1 bis 70 Gewichtsteilen pro 100 Gewichtsteile Komponenten(A) zugesetzt ist.

4. Flüssige Siliconkautschukzusammensetzung mit niedrigem spezifischen Gewicht gemäß einem der vorstehendem Ansprüche, wobei das Wasser ausgewählt ist aus der Gruppe von destilliertem Wasser, ultrafiltriertem und ionenausgetauschtem Wasser und Ionenaustauschwasser.

5. Flüssige Siliconkautschukzusammensetzung mit niedrigem spezifischen Gewicht gemäß einem der vorstehendem Ansprüche, die ferner hohle Siliconharzteilchen mit einem mittleren Durchmesser von 0,1 bis 500 μm enthält.

6. Flüssige Siliconkautschukzusammensetzung mit niedrigem spezifischen Gewicht gemäß einem der vorstehendem Ansprüche, wobei Komponente (A) ein Polyorganosiloxan ist, das mindestens zwei siliciumgebundene Alkenylgruppen enthält, und Komponente (C) enthält:

(C-1) einen Katalysator auf Platinbasis, wobei die Menge von Platinmetall in diesem Katalysator auf Platinbasis von 0,01 bis 500 Gewichtsteile pro 1.000.000 Gewichtsteile Komponente (A) reicht,
(C-2) ein Vernetzungsmittel in Form eines Polyorganosiloxans, das mindestens zwei siliciumgebundene Wasserstoffatome pro Molekül enthält, in einer Menge, so dass das Verhältnis der Molzahl von siliciumgebundenem Wasserstoff zu der Molzahl von siliciumgebundenen Alkenylgruppen in Komponente (A) von 0,5:1 bis 20:1 reicht.

7. Zweiteiliges Set, das angepasst ist, um bei der Herstellung der flüssigen Siliconkautschukzusammensetzung gemäß Anspruch 6 verwendet zu werden und das einen ersten Teil, der einen Teil von Komponente (A) und den Katalysator auf Platinbasis, aber kein Vernetzungsmittel, enthält, und einen zweiten Teil, der den verbleibenden Teil der Komponente (A) und das Vernetzungsmittel, aber keinen Katalysator auf Platinbasis, enthält, und wobei jede der Komponenten (B), (D) und (E) in entweder diesem ersten Teil oder diesem zweiten Teil oder in beiden Teilen vorliegen.

8. Verwendung einer flüssigen Siliconkautschukzusammensetzung mit niedrigem spezifischen Gewicht gemäß einem der vorstehenden Ansprüche als Beschichtung auf einer Fixierwalze.

9. Gegenstand, der aus einer Siliconkautschukzusammensetzung mit niedrigem spezifischen Gewicht, der durch thermisches Härten der flüssigen Siliconkautschukzusammensetzung mit niedrigem spezifischen Gewicht gemäß einem der vorstehenden Ansprüche 1-7 erhalten wird, geformt wird.


**Revendications**

1. Composition de caoutchouc de silicone liquide présentant une faible densité, comprenant :

(A) 100 parties en poids d'un diorganopolysiloxane liquide ayant une viscosité de 100 à 100 000 mPa.s ;
(B) de 1 à 50 parties en poids d'une charge de silice de renforcement hydrophobe sous la forme d'une poudre fine ;
(C) un agent de durcissement en une quantité suffisante pour durcir la composition ;
(D) de 0,1 à 20 parties en poids de particules de résine creuses consistant en enveloppes externes faites d'une résine thermoplastique non-silicone, et de coeurs gazeux ou de liquides volatils ; et
(E) de l'eau dans un rapport volumique eau/composant (D) allant de 0,01/1 à 5/1.

2. Composition de caoutchouc de silicone liquide présentant une faible densité selon l'une quelconque des revendications précédentes, qui comprend en outre (F) de 1 à 20 parties en poids de particules de poudre creuses ayant des enveloppes faites d'un matériau inorganique.

3. Composition de caoutchouc de silicone liquide présentant une faible densité selon l'une quelconque des revendications précédentes, dans laquelle un mélange des composants D et E est ajouté en une quantité de 1 à 70 parties en poids pour 100 parties en poids du composant (A).

4. Composition de caoutchouc de silicone liquide présentant une faible densité selon l'une quelconque des revendications précédentes, dans laquelle l'eau est choisie dans le groupe composé de l'eau distillée, de l'eau ultrafiltrée et ayant subi un échange d'ions et de l'eau ayant subi un échange d'ions.

5. Composition de caoutchouc de silicone liquide présentant une faible densité selon l'une quelconque des revendications précédentes, qui comprend en outre des particules creuses de résine de silicone ayant un diamètre moyen de 0,1 à 500 μm.

6. Composition de caoutchouc de silicone liquide présentant une faible densité selon l'une quelconque des revendications précédentes, dans laquelle le composant (A) est un polyorganosiloxane contenant au moins deux groupes alcényle liés à des atomes de silicium et le composant (C) comprend :-

(C-1) un catalyseur à base de platine, dans lequel la quantité du métal platine dans ledit catalyseur à base de platine est de 0,01 à 500 parties en poids pour 1 000 000 parties en poids du composant (A) ; et

(C-2) un agent de réticulation sous la forme d'un polyorganosiloxane contenant au moins deux atomes d'hydrogène liés à des atomes de silicium par molécule, en une quantité telle que le rapport du nombre de moles d'atomes d'hydrogène liés à des atomes de silicium au nombre de moles de groupes alcényle liés à des atomes de silicium dans le composant (A) est de 0,5/1 à 20/1.

7.  Kit en deux parties adapté pour être utilisé dans la préparation de la composition de caoutchouc de silicone liquide selon la revendication 6, comprenant une première partie contenant une portion de composant (A) et le catalyseur à base de platine mais pas d'agent de réticulation et une seconde partie contenant la portion restante de composant (A) et l'agent de réticulation mais pas de catalyseur à base de platine, et ayant chacun des composants (B), (D) et (E) dans l'une ou l'autre desdites première et seconde parties ou bien dans ladite première partie et ladite seconde partie.

8.  Utilisation d'une composition de caoutchouc de silicone liquide présentant une faible densité selon l'une quelconque des revendications précédentes, comme revêtement pour un rouleau de fixation.

9.  Article moulé à partir d'un caoutchouc de silicone présentant une faible densité obtenu en durcissant thermiquement la composition de caoutchouc de silicone liquide présentant une faible densité selon l'une quelconque des revendications précédentes 1 à 7.